# EUROPEAN PATENT SPECIFICATION

(11) **EP 2 148 842 B1**
(45) Date of publication and mention of the grant of the patent: **21.11.2012**
(21) Application number: 08750449.4
(22) Date of filing: 18.04.2008
(51) Int. Cl.: C03B 37/05, C03B 37/07

(54) **METHOD FOR OPTIMISING THE OPERATION OF A FIBERISING APPARATUS WHICH FORMS MINERAL FIBRE AND A SOFTWARE PRODUCT**
VERFAHREN ZUR OPTIMIERUNG DES BETRIEBS EINES FASERHERSTELLUNGSGERÄTS ZUR HERSTELLUNG VON MINERALFASERN UND SOFTWAREPRODUKT
PROCÉDÉ POUR OPTIMISER LE FONCTIONNEMENT D'UN APPAREIL DE DÉFIBRAGE QUI FORME DES FIBRES MINÉRALES, ET PRODUIT LOGICIEL CORRESPONDANT

(30) Priority: 20.04.2007 FI 20070307
(43) Date of publication of application: 03.02.2010
(73) Proprietor: Paroc Oy Ab, 01300 Vantaa (FI)
(72) Inventor: ÅSTRAND, Erik, FI-21600 Parainen (FI); WALLI, Bjarne, FI-21600 Parainen (FI); LINDGREN, Tommy, FI-20540 Turku (FI)
(74) Representative: Suominen, Kaisa Liisa
(86) International application number: PCT/FI2008/050206
(87) International publication number: WO 2008/129130

(56) References cited:
- WO-A-92/10435
- WO-A-92/10436
- WO-A-92/12941
- WO-A-2004/000742
- JP-A- 4 175 240

## Description

The invention relates to a method for optimising the operation of a fiberising apparatus forming mineral fibres and a software product according to the preambles of the independent claims presented further below.

Mineral wool is manufactured by melting suitable mineral-rich raw materials, such as diabase, limestone or slag in a melting furnace. The obtained melt is led to a fiberising device, where it is formed into mineral fibres. A cascade-type fiberiser can typically be used as a fiberising device, which cascade-type fiberiser typically comprises four fiberising rotors which rotate around a horizontal or nearly horizontal axis. The axes of the fiberising rotors are typically arranged on different heights. Melt is fed to the mantle surface of the first fiberising rotor, where a part of it adheres. The rest of the melt is thrown from the first mantle surface towards the mantle surface of the second fiberising rotor. Again a part of the melt gets a hold of the mantle surface of the second rotor and the rest of the melt is thrown towards the mantle surface of the third rotor. A part of the melt again adheres to the third mantle surface and the rest is thrown to the fourth mantle surface, where preferably the entire remaining melt mass gets a hold. The melt, which has gotten a hold of each of the rotors' mantle surface, is by means of centrifugal force formed into fibres, which detach from the melt circuits on the fiberising rotors. The detachment of the fibres, their trajectory after detachment and also their qualitative properties may be assisted by arranging air blows around the fiberising rotors, the force and the direction of which air blows can be used to make an impact on the properties of the fibres. The fibres are directed from the fiberising device to a collecting means, for example to an inclined conveyor or a rotating drum, arranged in front of the fiberising apparatus, in the second end of the collecting chamber. Binder is also generally added to the fibres prior to their collection, with the aid of which binder individual fibres are made to attach better to each other in the fibre web obtained later in the process.

The fiberising rotors of the fiberising device may be provided with magnetic bearings, as is presented for example in the publication WO 90/15032.

WO 92/10435 discloses a method of controlling fibre generation in a process where mineral melt is thrown into fibres with the aid of a centrifugal force. The fibre generation is controlled by accomplishing controlled vibrations in the spinning rotor, provided with non-contact magnetic bearing.

WO 92/10436 discloses a method of controlling fibre generation in a process where mineral melt is thrown into fibres with the aid of a centrifugal force. The melt route over the rotors is controlled by changing the position of one or more of the rotors. The rotors may be provided with magnetic bearings, the bearing deviations constituting a measure of wheel load changes used for the corresponding rotor positions to compensate the wheel load changes.

WO 93/12941 discloses a method for forming stone wool. The fiberising rotors may be mounted in magnetic bearings.

Nowadays the amount of fibres formed in the fiberising process is established when the primary web formed on the collecting member is conveyed onward in the process to the weighing conveyor. The actual production volume of the fiberising device is thus established with a delay, which makes rapid reacting to possible changes occurring in the process more difficult. Nowadays it is attempted to predict the production volumes of the fiberising device by comparing the weight of the obtained fibre web to the effect used by the fiberising rotors of the fiberising device. This method is however not accurate and fast enough in all cases in order to ensure the optimal process conditions.

The individual fiberising rotors of the fiberising device are also worn during the fiberising process. The melt fed to the fiberising rotor may cause for example uneven wear of the surface of a fiberising rotor, which immediately affects the quantity and quality of the fibres formed on the fiberising rotor. Nowadays it is attempted to control the shape of the fiberising rotors by monitoring the quantity and quality of the produced fibres, and by examining the rotors visually in connection with process shutdowns. It is clear that in this way the impaired shape of an individual rotor cannot nearly always be observed in time, but fibres may be produced for long periods with a fiberising device, in which one or several individual rotors are worn out or unbalanced.

It is an object of the present invention to reduce or even eliminate the above-mentioned problems, which appear in the prior art.

It is an object of the present invention to provide a method, with which the control and optimisation of the fiberising process can be improved significantly.

It is another object of the present invention to provide a method, with which the shape and/or change in shape of an individual fiberising rotor of a fiberising device is easy to control in real-time or nearly in real-time.

The above-mentioned disadvantages are eliminated or reduced, and the above-mentioned aims are attained with the present invention, which is characterised in what is defined in the characterising parts of the independent claims presented further below.

Some preferred embodiments according to the invention are disclosed in the dependent claims presented further below.

In a typical method according to the invention for optimising the operation of a fiberising apparatus forming mineral fibres
- measuring values are collected from at least one fiberising rotor, forming mineral fibres, rotating around a horizontal or nearly horizontal axis and provided with a radial magnetic bearing, which measuring values describe the rotational track of the fiberising rotor around the magnetic bearing, and
- the obtained measuring values are used to calculate an estimate of the amount of produced mineral fibres.

A typical arrangement for optimising the operation of a fiberising apparatus forming mineral fibres comprises
- a fiberising apparatus, which has at least one fiberising rotor rotating around a horizontal or nearly horizontal axis, which rotor is provided with a radial magnetic bearing,
- blow-off means, which are arranged to surround the active mantle surfaces of the rotors of the fiberising apparatus and which are arranged in the immediate vicinity of the active mantle surfaces for blowing the fibres from the mantle surfaces towards a collecting means, which is arranged at a distance from the fiberising apparatus,
- binder means, with which binder is added to the formed mineral fibres,
- a monitoring means, such as a position sensor, which is arranged to monitor the rotational track of the fiberising rotor during the fiberising process and to collect measuring values describing the rotational track, and further
- a controlling unit, which is arranged to calculate an estimate of the amount of produced mineral fibres based on the obtained measuring values.

A typical software product according to the invention is arranged to perform the steps of the method according to the invention.

Now it has surprisingly been found that the measuring values describing the rotational track of the magnetic bearing may be used to estimate the amount of mineral fibres formed with the fiberising device and the estimates of the amount of formed fibres obtained this way are significantly more accurate than estimates obtained until now. Using the method according to the invention, fluctuations occurring in the amounts of formed fibres are also observed earlier than before, whereby other parameters of the process may, when necessary, be altered to correspond to the changed fibre amount. More accurate estimates of the actual amount of fibres formed at the fiberising device make control of the fiberising process as a whole easier and enable a more even quality of the final product as well as smaller material losses in the process.

According to a preferred embodiment of the invention the shape and change in the shape of a fiberising rotor during the fiberising process are also controlled based on the measuring values obtained from the individual fiberising rotor and describing the rotational track of the rotor. Thus the shape of the rotor and its changes can easily and simply be monitored in real-time. The fiberising process does no longer need to be interrupted in order to check the shape of the fiberising rotors, which makes the fibre manufacturing process more efficient. More reliable information about the shape of the fiberising rotors is also obtained than by monitoring the quantity and quality of the formed fibres. When the shape of the fiberising rotor changes, its rotational track generally also changes, and this change can easily be observed, which enables fast and well-timed repairing steps. Typically in the method according to the invention mineral melt is fed to the mantle surface of the first rotor of the fiberising device, wherefrom the mineral melt is thrown to the mantle surface of the second rotor, and thence onwards to the mantle surface of a possible subsequent rotor, whereby mineral fibres are formed on the active mantle surfaces of the rotors. The fiberising device generally comprises at least two, typically three or more, most typically four, fiberising rotors which rotate around a horizontal or nearly horizontal axis. Usually at least one of the fiberising rotors is provided with a radial magnetic bearing, preferably all the fiberising rotors of the fiberising apparatus are provided with radial magnetic bearings. The formed fibres are blown from the active mantle surfaces of the rotors of the fiberising device towards a collecting member, which is arranged at a distance from the fiberising device, and blow-off means are used for the blowing, which blow-off means are arranged to surround the active mantle surfaces of the rotors of the fiberising device and which are arranged in the immediate vicinity of the active mantle surfaces. Binder is normally added to the mineral fibres formed on the mantle surfaces.

The estimate of the amount of formed mineral fibres, which is obtained by calculation by using measuring values describing the rotational track of the fiberising rotor around the magnetic bearing, may also be used to control the other variables in the fiberising process. Based on the calculated estimate the feeding of binder at the fiberising device and/or the speed of the collecting member arranged in front of the fiberising device may for example be adjusted. This way the amount of binder may be adjusted to better correspond to the amount of mineral fibres actually formed on the fiberising rotors, and the feeding of too large or too small amounts of binder may be minimised. By adapting the speed of the collecting member to the amount of formed fibres, the uniformity of the surface weight of the primary web and at the same time the even quality of the final product may be improved.

According to an embodiment of the invention measuring values describing the rotational track of at least one fiberising rotor around the magnetic bearing are collected with a monitoring means, such as a position sensor. In a preferred embodiment the monitoring means and the magnetic bearing are arranged around the axis of the fiberising rotor. Thus the monitoring means, such as the position sensor, continuously monitors the position of the axis in relation to the magnetic bearing, i.e. the mutual relationship between the magnetic bearing and the axis of the rotor. The monitoring means may thus be arranged adjacent to the magnetic bearing of the fiberising rotor, whereby it monitors the rotation of the rotor around the axis of the magnetic bearing. When the rotor is in good condition and balanced, its rotational track is normally symmetric and circular. When the surface of the rotor is worn or the melt detaches from the rotor in an uneven manner, the rotational track changes from symmetric and circular to asymmetric and oval-shaped. This change can be utilised when evaluating a change in the shape of the fiberising rotor. When the fiberising rotor becomes asymmetric for example due to wear, the diameter of the rotational track of said rotor is increased significantly. The increased rotational track of the fiberising rotor may thus be used as a signal that the shape of the rotor has deteriorated, the quality and/or quantity of fibres produced by it is decreased. In this case the rotor should be changed to a new one as soon as possible. If it is not possible to change the rotor, the changed conditions of the fiberising rotor may be compensated by adjusting other parameters of the process, such as for example the rotating speed of the rotor or the blowing speed of the blow-off means.

It is clear that an optional number of rotors of the fiberising device may be monitored by monitoring means and measuring values describing the rotational tracks of the rotors may be collected from them. Preferably two, three or four rotors, most preferably each of the fiberising device's rotors, are monitored in the invention, and measuring values describing the rotational track of the rotors are collected from a corresponding number of rotors. If the shape of each of the rotors of the fiberising device is monitored, an extensive view of the fiberising process is obtained, which makes the control and optimising of the fiberising process significantly easier.

In a preferred embodiment of the invention the measuring values obtained from an individual fiberising rotor during the fiberising process are compared to measuring values obtained from the same fiberising rotor in the beginning of the fiberising process and stored in the memory unit of the arrangement. Generally the shape of the fiberising rotor is good or fairly good in the beginning of the fiberising process when the feeding of mineral melt to the fiberising device is begun, whereby the measuring values describing the rotational track of the fiberising rotor received in the beginning of the fiberising process can normally be assumed to represent values describing a rotor in good shape. These measuring values may be stored temporarily or permanently in a suitable database or in the memory unit of the arrangement in order to be stored. Measuring values obtained during the fiberising process are then compared to these stored initial measuring values, and the deviation in rotational track obtained as a result of the comparison depicts the change occurring in the shape of the rotor. The measuring values obtained from an individual rotor are thus compared to the measuring values obtained earlier from the same rotor, in other words the individual rotor is compared to itself as a function of time. In the method according to the invention it is thus not essential to compare two or more rotors to each other.

A maximum allowed deviation from the measuring values collected in the beginning of the fiberising process and/or stored in the memory unit may be determined for each fiberising device and for each rotor of a fiberising device. When the difference or deviation between the obtained measuring value and the measuring value obtained from the same rotor in the beginning of the fiberising process exceeds this predetermined limit value, the fiberising process may be interrupted and the monitored fiberising rotor or the entire fiberising device may be changed.

The comparison between the measuring values collected at different times may be performed for example using a comparison unit, which is arranged to compare measuring values obtained from the fiberising rotor during the fiberising process to stored measuring values, which have been obtained from the same rotor in the beginning of the fiberising process. The comparison unit comprises the necessary means for retrieving the initial measuring values from the memory unit and comparing them to the measuring values obtained at that time.

When desired, the obtained measuring values can be processed by calculating for them so-called tared values, which are then used for estimating the amount of fibres produced with the fiberising device and/or for evaluating the shape of the fiberising rotor. The tared value for an individual measuring value is obtained by deducting from the actual measuring value obtained with the fiberising rotor an "idle running value", which has been obtained when the fiberising device has been run without mineral melt before the fiberising process has begun.

According to one embodiment of the invention the measuring values obtained with the monitoring means may also be used to control the detachment of the mineral melt from the surface of said fiberising rotor. Sometimes disturbances may occur in the detachment of the mineral melt from the surface of the rotor, whereby for example too little mineral melt remains on the surface of the rotor. This causes a deterioration in the quality of the formed fibres and/or a reduction in the amount of formed fibres. A small amount of melt on the surface of the rotor affects the rotational track of the rotor, which rotational track may be compared to the rotational track which prevails in normal conditions, which is stored in the memory of the control unit. A situation, which arises from a change in the rotational track, may relatively simply be observed. If it is established that disturbances occur in the detachment of the mineral melt from the surface of the rotor, the volume or speed of the air blows produced by the blow-off means surrounding said rotor may be increased in order to rectify the situation. The rotational speed of the rotor may also be altered, either at the same time or as a separate procedure.

If all the rotors of the fiberising device are monitored with monitoring means and measuring values describing their rotational tracks are collected from them, also the route of the mineral melt in the fiberising device may be controlled based on the obtained measuring values. The impact point of the mineral melt on the surface of an individual fiberising rotor may be estimated/calculated based on the collected measuring values. This way more accurate information is received concerning the effects of the route of the mineral melt on the fiberising process and on the quantity and quality of the formed fibres.

It is also possible that also second measuring values are collected from the fiberising rotor, which values describe for example the power used by the magnetic bearing of the fiberising rotor. Typically the voltage used by the magnetic bearing is constant, whereby a change in the current needed by the magnetic bearing is comparable to a change in the power used by the magnetic bearing. The change in the power may thus be monitored by monitoring the change in the amount of current used by the magnetic bearing of an individual rotor. Based on the obtained second measuring values at least one of the following may be adjusted: the route of the mineral melt in the fiberiser, the air blows around the fiberising rotors and/or the amount of fed binder, or the feeding point of the mineral melt on the first rotor.

If changes occur in the power used by the magnetic bearing, it may also be an indication of the need for changing the fiberising conditions at the said fiberising rotor. An increase in the power used by the magnetic bearing may for example be a sign that there is more mineral melt than normal on the surface of the fiberising rotor. As was established earlier, this may lead to a change in the quantity or quality of the fiberising result. Thus the rotational speed of the said rotor may for example be increased, whereby the formation of fibres becomes more effective on the said rotor. It is also possible to increase the feeding of binder around the said rotor based on the second measuring value obtained from the magnetic bearing. The power needed by the magnetic bearing of an individual fiberising rotor may thus also be used to estimate and/or optimise the amount of mineral fibres produced by the said fiberising rotor. If the power used/power changes of the magnetic bearings of all the rotors of the fiberising device are monitored, the operation of the entire fiberising device may be optimised. If needed, the travel speed of the collecting member may also be changed, if the measuring values obtained from the fiberising device predict an increase/reduction in the amount of produced fibre. Thus the surface weight of the primary web can be kept as constant as possible, which improves the quality of the final product and facilitates the treatment of the web in a further process.

When measuring the power used by the magnetic bearings on all the fiberising rotors of the fiberising device, the power used by the magnetic bearings may be monitored between the fiberising rotors, whereby the distribution of the melt on the fiberising rotors may be estimated based on the power deviation. At the same time the route of the melt in the fiberising device may also be estimated. When necessary, the distribution and/or route of the mineral melt may be altered based on the obtained results. Typically the route of the mineral melt in the fiberiser may be adjusted by altering the place of an individual fiberising rotor in relation to the other fiberising rotors or by altering the feed point of the mineral melt to the first fiberising rotor of the fiberising device. The feed point of the mineral melt may be altered for example by altering the place of the feed trough for the mineral melt either in the lateral direction of the fiberising device or in the direction of the axis of the first fiberising rotor.

In one embodiment of the invention also third measuring values are collected from the fiberising rotor by using third monitoring means, which values describe the power used by the motor that rotates the fiberising rotor. Thus for example the slip of the motor power can be monitored, i.e. how much lower the rotational speed of the rotor of the motor is compared to the synchronous speed determined by the frequency of the network. The rotational speed of the motor n may be calculated using the formula n = 2πf(1 - f)
and the synchronous speed nₛ = (60 × f)/p,
where f is the frequency of the network and p is the pole circle number. By monitoring the slip of the motor, information is obtained regarding the working point of the motor and about how much power the fiberising process taking place on the rotor requires. The working point is the point, where the power/current usage of the motor sets, depending on the process.

According to one embodiment of the invention a speed sensor may also be arranged in the immediate vicinity of a fiberising rotor of a fiberising device, in order to determine the accurate rotational speed of the fiberising rotor.

According to one embodiment of the invention at an individual fiberising rotor may be monitored one or several of the following measurable variables: rotational frequency, rotational speed, motor power, magnetic force in the X-direction and/or magnetic force in the Y-direction. The rotational frequency of the rotor measured from the rotor may be used to describe the rotational speed of the rotor, while the power used by the motor of the fiberising rotor is comparable to the amount of melt on the surface of the rotor, in that the power required by the rotor grows as the amount of melt grows. The values received from the magnetic bearing of the rotor for the X- and Y-directed forces of the bearing also describe the amount of melt on the surface of the rotor and the distribution of the melt on the mantle surface. The change in all these variables may be followed also as a function of time, whereby valuable information is received about possible changes in the fiberising conditions and about change in the shape of the fiberising rotors as a function of time during the fiberising process.

In one preferable embodiment of the invention the X- and Y-directed forces of the bearing from the magnetic bearings of each rotor and the axis speeds of each rotor are measured from a fiberising device, which comprises four fiberising rotors, which rotate around a horizontal axis and are provided with magnetic bearings. This data is collected into the memory of the control unit and a mathematic regression model is created, on the basis of which a more real-time and/or accurate estimate of the amount of produced fibres can be made than with the aid of current methods. Creating a mathematic model using the measuring values according to the invention is as such known to a person skilled in the art.

According to one embodiment of the invention the arrangement also comprises a compensation module arranged in connection with the magnetic bearing of the fiberising rotor of the fiberising device, which compensation module is arranged to utilize the information received from the speed sensors, which describes the speed of the fiberising rotor. With the aid of the compensation module there is a striving to prevent the saturation of the magnets of the magnetic bearings caused by electric current in the cases when the fiberising rotor has a natural unbalance, not caused by the wear of the rotor. Thus it is not striven to keep the rotor by force on its optimal rotational track, but rather the rotor is allowed to rotate "freely" around its inertial axis, which improves the control of the forces and currents in the bearings.

Preferably, in the method according to the invention the measuring values collected by the monitoring means are filtered by using a filtering unit before the said values are transmitted to the control unit. The filtering may be performed by removing from the obtained measuring values any sudden peak-like fluctuations, which exceed certain predetermined filtering limit values. The filtering unit may also comprise means, with the aid of which an average is calculated from the measuring values obtained within a certain time frame, which average is then used to monitor the shape of the fiberising rotor. The filtering unit may also use other various filtering techniques, which are as such known to a person skilled in the art.

One advantage of the invention is that with its aid the unbalance of all the rotors of the fiberising device may be brought out significantly more accurately, for example an uneven distribution of the mineral melt between different fiberising rotors. Previously this problem has been seen only indirectly as a deterioration of the fiberising result, but due to the present invention direct real-time or almost real-time information about it may be obtained.

According to an embodiment of the invention the fiberising rotor, which has been radially mounted on a magnetic bearing, may be mounted on a magnetic bearing also axially. This allows for a significantly larger amount of information to be collected from the fiberising rotor, and naturally an even more accurate control and optimisation of the fiberising process.

## Claims

1. Method for optimising the operation of a fiberising apparatus forming mineral fibres, in which method
- measuring values are collected from at least one fiberising rotor, forming mineral fibres, rotating around a horizontal or nearly horizontal axis and provided with a magnetic bearing, which measuring values describe the rotational track of the fiberising rotor around the magnetic bearing, and
- the obtained measuring values are used to calculate an estimate of the amount of produced mineral fibres.

2. Method according to claim 1, **characterised in that** based on the calculated estimate the feeding of a binder at the fiberising apparatus and/or the speed of a collecting member arranged in front of the fiberising apparatus are adjusted.

3. Method according to claim 1, **characterised in that** based on the obtained measuring values the shape of said fiberising rotor and change in the shape during the fiberising process are monitored.

4. Method according to claim 1 or 3, **characterised in that** the measuring values obtained from the fiberising rotor during the fiberising process are compared to stored measuring values, which have been obtained from the same rotor in the beginning of the fiberising process.

5. Method according to claim 4, **characterised in that** when the difference between the obtained measuring value and the measuring value obtained from the same rotor in the beginning of the fiberising process exceeds a predetermined limit value the fiberising process is interrupted and the monitored fiberising rotor or the entire fiberising apparatus is changed.

6. Method according to any of the claims 1-5, **characterised in that** the obtained measuring values are used to monitor the detachment of the mineral melt from the surface of said fiberising rotor.

7. Method according to any of the claims 1-6, **characterised in that** also second measuring values are collected from the fiberising rotor, which values describe the power used by the magnetic bearing of the fiberising rotor, and based on the obtained second measuring values at least one of the following is adjusted: the route of the mineral melt in the fiberiser, the air blows around the fiberising rotors and/or the amount of fed binder, or the feeding point of the mineral melt on the first rotor.

8. Method according to any of the claims 1-7, **characterised in that** also third measuring values are collected from the fiberising rotor, which values describe the power used by the motor, which rotates the fiberising rotor.

9. A computer program, **characterised in that** it comprises computer program code means, which are arranged to perform all the steps of a method defined in any of the claims 1-8 when said program is run in a computer.

## Patentansprüche

1. Verfahren zur Optimierung des Betriebs einer Zerfaserungsvorrichtung, welche Mineralfasern ausbildet, wobei durch das Verfahren
- Messwerte von mindestens einem Zerfaserungsrotor gesammelt werden, welcher Mineralfasern ausbildet, sich um eine horizontale oder nahezu horizontale Achse dreht und mit einem Magnetlager versehen ist, wobei die Messwerte die Drehbahn des Zerfaserungsrotors um das magnetische Lager herum beschreiben, und
- die erhaltenen Messwerte verwendet werden, um eine Abschätzung der Menge der erzeugten Mineralfasern zu berechnen.

2. Verfahren nach Anspruch 1, **dadurch gekennzeichnet, dass** abhängig von der berechneten Schätzung die Zuführung eines Binders zu der Zerfaserungsvorrichtung und/oder die Geschwindigkeit eines Sammelteils, welches vor der Zerfaserungsvorrichtung angeordnet ist, eingestellt werden.

3. Verfahren nach Anspruch 1, **dadurch gekennzeichnet, dass** abhängig von den erhaltenen Messwerten die Form des Zerfaserungsrotors und eine Änderung in der Form während des Zerfaserungsprozesses beobachtet werden.

4. Verfahren nach Anspruch 1 oder 3, **dadurch gekennzeichnet, dass** die Messwerte, welche während des Zerfaserungsprozesses von dem Zerfaserungsrotor erhalten werden, mit gespeicherten Messwerten verglichen werden, welche von demselben Rotor zu Beginn des Zerfaserungsprozesses erhalten worden sind.

5. Verfahren nach Anspruch 4, **dadurch gekennzeichnet, dass**, wenn der Unterschied zwischen dem erhaltenen Messwert und dem Messwert, welcher von demselben Rotor zu Beginn des Zerfaserungsprozesses erhalten wurde, einen vorbestimmten Grenzwert übersteigt, der Zerfaserungsprozess unterbrochen wird und der überwachte Zerfaserungsrotor oder die gesamte Zerfaserungsvorrichtung verändert werden.

6. Verfahren nach einem der Ansprüche 1-5, **dadurch gekennzeichnet, dass** die erhaltenen Messwerte verwendet werden, um das Lösen der Mineralschmelze von der Oberfläche des Zerfaserungsrotors zu überwachen.

7. Verfahren nach einem der Ansprüche 1-6, **dadurch gekennzeichnet, dass** auch zweite Messwerte von dem Zerfaserungsrotor gesammelt werden, wobei die Werte die Leistung beschreiben, welche durch das Magnetlager des Zerfaserungsrotors eingesetzt wird, und dass abhängig von den erfassten zweiten Messwerten zumindest eines von Folgendem eingestellt wird: die Route der Mineralschmelze in den Zerfaserer, die Luftströme um die Zerfaserungsrotoren herum und/oder die Menge des zugeführten Binders oder der Zuführungspunkt der Mineralschmelze auf dem ersten Rotor.

8. Verfahren nach einem der Ansprüche 1-7, **dadurch gekennzeichnet, dass** auch dritte Messwerte von dem Zerfaserungsrotor gesammelt werden, wobei die Werte die Leistung beschreiben, welche durch den Motor, welcher den Zerfaserungsrotor dreht, eingesetzt wird.

9. Computerprogramm, **dadurch gekennzeichnet, dass** es Computerprogrammcodemittel umfasst, welche ausgestaltet sind, um alle Schritte eines Verfahrens, welches in einem der Ansprüche 1-8 definiert ist, auszuführen, wenn das Programm in einem Computer läuft.

## Revendications

1. Procédé d'optimisation du fonctionnement d'un appareil de défibrage formant des fibres minérales, dans lequel procédé
- les valeurs de mesure sont collectées à partir d'au moins un rotor de défibrage, formant des fibres minérales, tournant autour d'un axe horizontal ou presque horizontal et doté d'un palier magnétique, lesquelles valeurs de mesure décrivent la trajectoire de rotation du rotor de défibrage autour du palier magnétique, et
- les valeurs de mesure obtenues sont utilisées pour calculer une estimée de quantité de fibres minérales produites.

2. Procédé selon la revendication 1, **caractérisé en ce qu'**en se basant sur l'estimée calculée, l'alimentation de l'appareil de défibrage en un liant et/ou la vitesse de l'organe de collecte agencé devant l'appareil de défibrage sont ajustées.

3. Procédé selon la revendication 1, **caractérisé en ce qu'**en se basant sur les valeurs de mesure obtenues, la forme dudit rotor de défibrage et le changement de forme pendant le processus de défibrage sont contrôlés.

4. Procédé selon la revendication 1 ou 3, **caractérisé en ce que** les valeurs de mesure obtenues à partir du rotor de défibrage pendant le processus de défibrage sont comparées à des valeurs de mesure stockées, qui ont été obtenues à partir du même rotor au début du processus de défibrage.

5. Procédé selon la revendication 4, **caractérisé en ce que** lorsque la différence entre la valeur de mesure obtenue et la valeur de mesure obtenue à partir du même rotor au début du processus de défibrage dépasse une valeur limite prédéterminée, le processus de défibrage est interrompu et le rotor de défibrage contrôlé ou l'appareil de défibrage entier est changé.

6. Procédé selon l'une quelconque des revendications 1 à 5, **caractérisé en ce que** les valeurs de mesure obtenues sont utilisées pour contrôler le décollement du minéral fondu de la surface dudit rotor de défibrage.

7. Procédé selon l'une quelconque des revendications 1 à 6, **caractérisé en ce que** des deuxièmes valeurs de mesure sont également collectées à partir du rotor de défibrage, lesquelles valeurs décrivent la puissance utilisée par le palier magnétique du rotor de défibrage, et en se basant sur les deuxièmes valeurs de mesure obtenues, au moins un des éléments suivants est réglé : la route du minéral fondu dans le défibreur, les jets d'air autour des rotors de défibrage et/ou la quantité de liant alimenté, ou le point d'alimentation du minéral fondu sur le premier rotor.

8. Procédé selon l'une quelconque des revendications 1 à 7, **caractérisé en ce que** des troisièmes valeurs de mesure sont également collectées à partir du rotor de défibrage, lesquelles valeurs décrivent la puissance utilisée par le moteur, qui met en rotation le rotor de défibrage.

9. Programme informatique, **caractérisé en ce qu'**il comprend des moyens de code de programme informatique, qui sont conçus pour réaliser toutes les étapes d'un procédé décrit dans l'une quelconque des revendications 1 à 8, lorsque ledit programme est exécuté sur un ordinateur.
